# EUROPEAN PATENT SPECIFICATION

(11) **EP 0 575 962 B1**
(45) Date of publication and mention of the grant of the patent: **15.01.1997**
(21) Application number: 93109957.6
(22) Date of filing: 22.06.1993
(51) Int. Cl.: B62D 33/06, B60N 3/16

(54) **Support for embedding elements obtained in the area of the center console of a commercial vehicle**
Einbauträger im Bereich der Mittelkonsole eines Nutzfahrzeuges
Support pour encastrer des éléments à proximité de la console centrale d'un véhicule utilitaire

(30) Priority: 23.06.1992 DE 4220467
(43) Date of publication of application: 29.12.1993
(73) Proprietor: IVECO MAGIRUS AG, D-89079 Ulm (DE)
(72) Inventor: Hannig, Martin, W-7900 Ulm (DE); Cameron, Ian, W-7910 Neu-Ulm (DE); Morando, Carlo, I-14100 Asti (IT)
(74) Representative: Boggio, Luigi

(56) References cited:
- EP-A- 0 348 383
- DE-A- 3 245 394
- DE-U- 8 905 715
- DE-U- 9 111 742
- FR-A- 2 348 843
- MAN,FORSCHEN,PLANEN, BANEN no. 11 , April 1980 , AUGSBURG (DE) pages 54 - 59 'VARIO-SYSTEM. EIN NEUES KONZEPT FUR NUTZFAHRZEUGE'

## Description

The present invention relates to a support for embedding elements obtained in the area of the center console of a commercial vehicle for housing embedding elements, such as a stove or the like.

A commercial vehicle of the known type ("Turbostar") is fitted with a support of the aforementioned type, wherein the supports may be represented by shelves, cupboards, boxes or the like. Non built-in elements, such as stove, refrigerator, computer, etc., are combined with the relevant matching support according to the specific design, and each support contains an embedding unit. A drawback being represented by the limited possibilities of varying insertion of expensive modules. Neither embedding unit in its whole nor each separate embedding element allow for such modularity, as may be satisfactory from the technical, economic and aesthetic points of view. Furthermore, integration in the vehicle 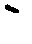 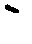 s cab of the supports designed for a commercial vehicle cannot be optimized without ad hoc embedding elements. They limit elbow room inside the cab, thus impairing freedom of movement.

It is known from the document FR-A-2 348 843 a support in the cab of a commercial vehicle for embedding a stove and a lavatory, which are covered by a common lid. This latter is adapted to swivel as to be supported in the open position on the instrument board of the vehicle, whereby the support is unadapted to form any floor on the area of central console.

Aim of the present invention is the embodiment of a support of the type described hereinbefore, such as may be easy to mount and may allow for variable use thereof, so that its integration inside the cab of a commercial vehicle may be optimal without impairing freedom of movement therein, at the same time allowing for the advantageous use, from the ergonomic point of view, of the appropriate embedding elements.

The main aim hereof is achieved by the present invention through the characteristics contained in the characterizing element of Claim 1.

Further advantages of the subject matter of the present invention being represented by the characteristics contained in Claims 2 to 9.

Aim of the present invention is the embodiment, as raised floor in the area of the vehicle 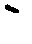 s center console, of a support for embedding elements comprising covered openings, capable of housing said elements. The height of said support, comprehensive of the lids of said openings, being equivalent to that of the center console, so as to avoid differences in height between center console and support, which may be of hindrance as well as disturbing from the aesthetic point of view. Said support presents comparatively small dimensions and may be designed in a variety of basic versions to be inserted in a variety of basic vehicles models. The lids of said openings being of a suitable non-slip material and such, that it may be trodden on. They may be of the snap-lid type and preferably fastened to the body of the support in a removable manner.

At least two different openings are preferably provided for in said support, conveniently square or rectangular in shape. Thus, they may be simply designed as embedding openings, capable of being fitted with a relevant embedding portion of the embedding element. Said openings having suitably tapering elements, in particular, inclined vertical peripheral side walls.

A further advantage of the present invention being represented by the possibility, in the event an embedding element were provided with an upper lid, for the latter to be used as foot-board to reach the upper berth in the commercial vehicle 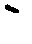 s cab. Such an element being conveniently represented by a refrigerator, which may be located close to the instrument panel of the commercial vehicle. Behind the refrigerator there being located, inside one opening of the support, a suitable embedding element in the form of a stove, the latter being concealed, when not used, by a snap-lid. Said snap-lid may be conveniently used as an aid (foot-board) to transversally reach a higher level inside the vehicle 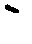 s cab, as well as to reach said closed lid of the refrigerator, so as to reach the upper berth inside the vehicle 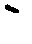 s cab.

The system according to the present invention allows for the sensible standardization of expensive embedding elements, in order to insert them in all commercial vehicles 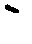 models. The support system according to the present invention is a very compact one. When embedding elements are not inserted therein, it acts as floor, thus enabling full exploitation of the room inside the vehicle 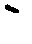 s cab. At the same time, it further allows for the belated and, therefore, simple and economical insertion of the desired embedding elements.

As thaught by European patent No 0 348 383 A2, the floor of a commercial vehicle is a mountable, standardized component. Said component being, therefore, a hollow prefab body made of plastic material used as fuel tank, not to house embedding elements such as a stove or the like.

German patent No DE-GM 91 11 742 further provides for an alternative embodiment of the floor of a commercial vehicle, obtained in the neighbourhood of the center console. Said embodiment, however, is provided for a lodging vehicle and its height does not equal that of the center console, but rather that of the floor of the rear lodging cab of the vehicle, so as to enable the driver seat to be comfortably and transversally reached from said lodging cab, at the same time obtaining an additional area.

The present invention shall be better described now by way of non-limiting examples, with reference to the accompanying drawings, in which:
Fig. 1 shows a schematic perspective view of an uncovered support near the center console, to the latter's left:

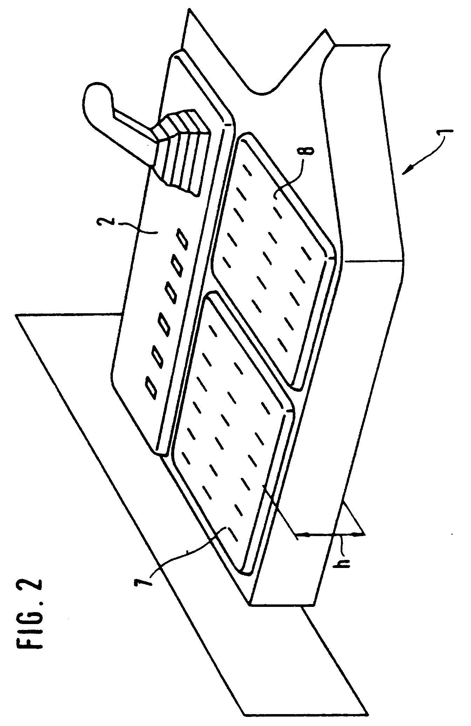

Fig. 2 shows the support of Fig. 1 with covered embedding openings;

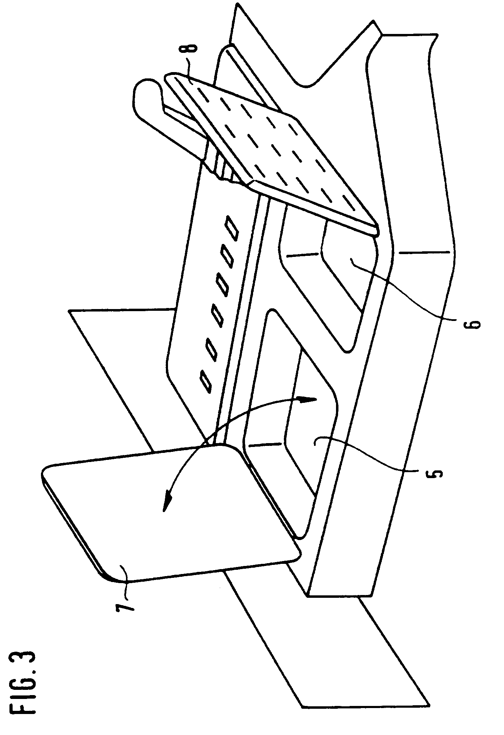

Fig. 3 shows the support of Fig. 2 in the open condition;

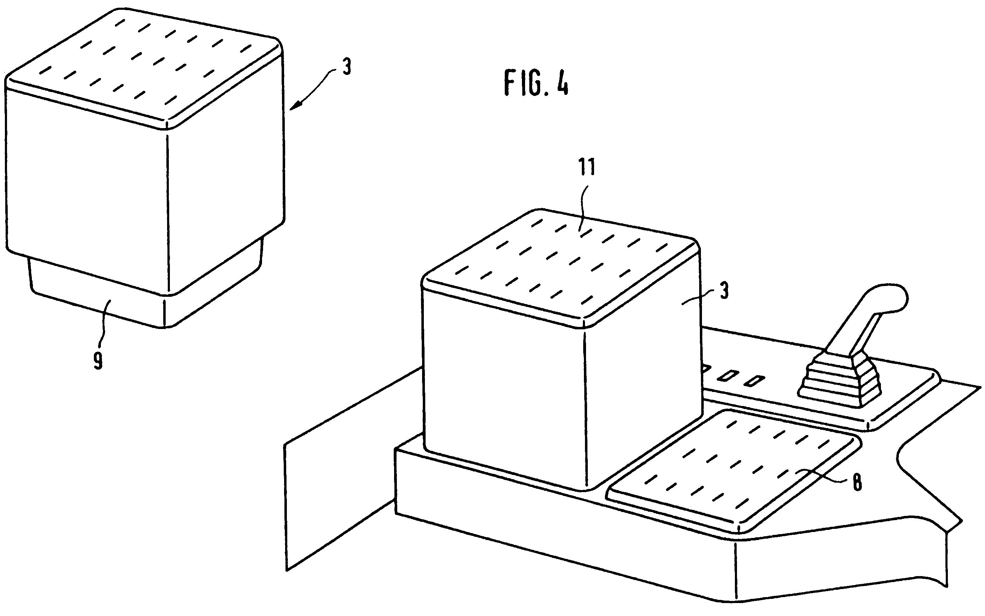

Fig. 4 shows the support of Fig. 2 with an inserted element in the form of a refrigerator, a further element, in the form of a stove, being integrated in the covered opening, at the back of the refrigerator;
Fig. 5 shows the embodiment of Fig. 4 in the open condition;
Fig. 6 shows a vertical section view, in the direction of the vehicle 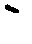 s length, of a support, wherein the latter 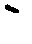 s rear end may extend to the rear sleeping cab;
Fig. 7 shows a similar view to that of Fig. 6 with the insertion of an additional intermediate element;

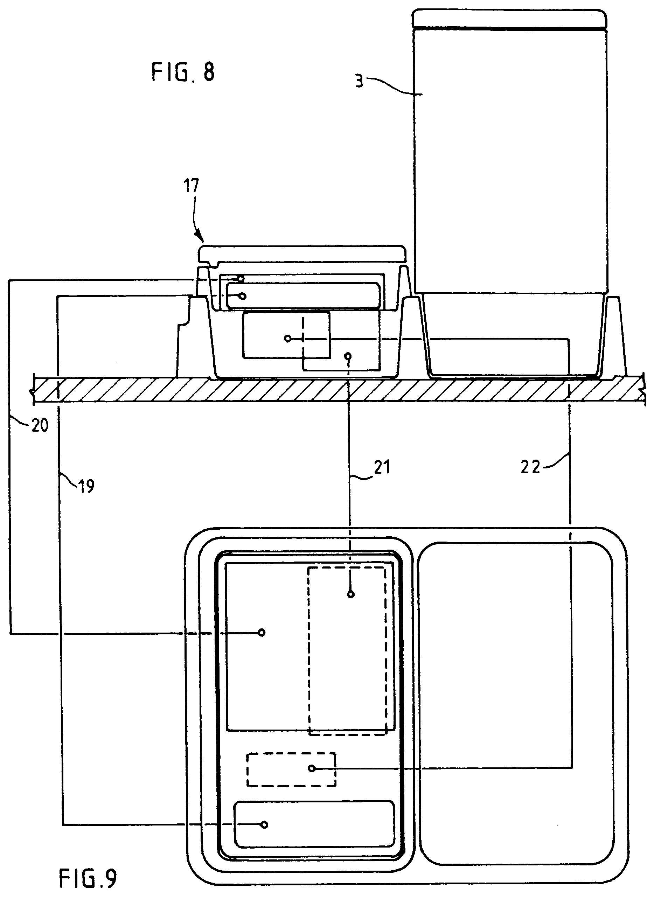

Fig. 8 shows a similar view to that of Fig.s 6 and 7, with inserted embedding elements;
Fig. 9 shows a top view of the support of fig. 8; and
Fig.s 10-13 show a schematic top view of the inside of a number of different vehicles 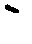 s cabs models.

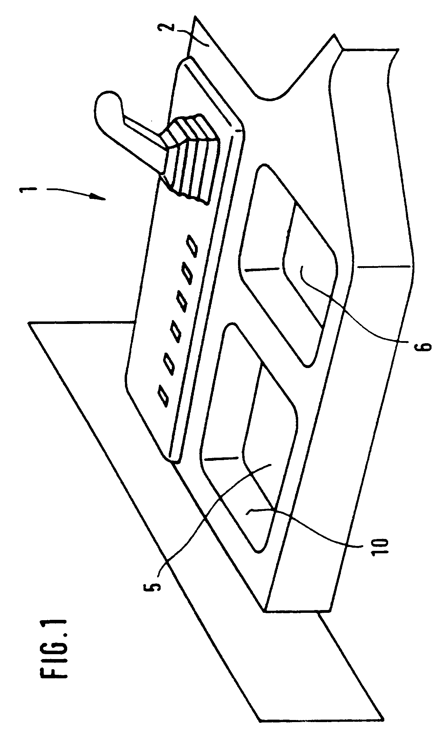

With reference to Fig. 1, there is obtained a prefabricated and pre-assembled support (1) in the area of center console (2) of a commercial vehicle, to the latter 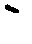 s left, comprising two openings having different dimensions and rectangular in shape (5, 6). Said openings (5, 6) being covered, when additional embedding elements are not scheduled to be inserted in the vehicle 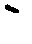 s cab, by swivel snap-lids (7, 8), as shown in Fig.s 2 and 3.

Said lids (7,8) being closed, the overall height of support (1), comprehensive of the height of lids (7, 8), is equal to height (h) of center console (2). The upper side of lids (7, 8), or else the lids in their whole, is made of a non-slip material and such that it may be trodden on. According to a first embodiment hereof, support (1) is designed to act as a base, in the form of raised floor of the vehicle 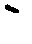 s cab for housing possible embedding elements, such as stove, refrigerator, computer or the like. With closed lids, no difference in height is to be noted, on the whole, between raised floor and center console (2), which result is very pleasing to the eye. Besides, said raised floor is easily practicable and, owing to the shape of its surface, may be easily identified as a surface, capable of being trodden on. Hindrances to freedom of movement inside the cab being reduced to a minimum.

A variety of embedding elements may be provided for on the basis of the vehicle 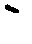 s model. With reference to Fig.s 4 and 5, there is provided an embodiment presenting a front embedding element (3), in the neighbourhood of the instrument panel, in the form of a refrigerator. Embedding element (3) having a portion (9), capable of being fitted into opening (5) of support (1). In its embedded position, element (3) being housed inside support (1), clearance free and in such a way, as to prevent it from slipping. Embedding position (9) and respective vertical peripheral side walls (10) of opening (5) have a tapering shape.

Above embedding element (3) there is provided a swivel snap-lid, similar to lids (7, 8), designed to be used as both cover and foot-board (11). Said cover/foot-board (11) may be utilized to reach upper rear sleeping cabs.

Inside rear opening (6) there is provided an element (4), in the form of a stove, enabling swivel lid (8) to be completely closed. The sleeping cab at the rear of the vehicle may be reached also with the aid of lid (8), the latter being in its closed position (prior to climbing on to cover/foot-board (11)).

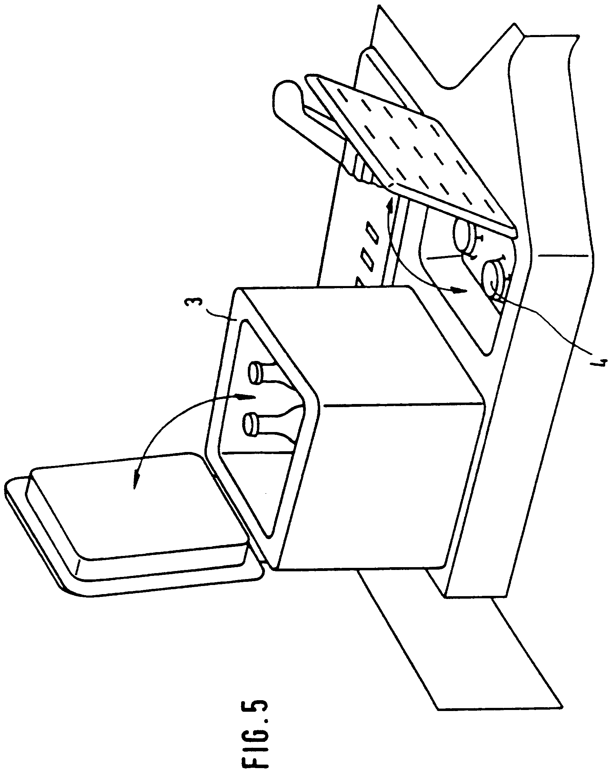

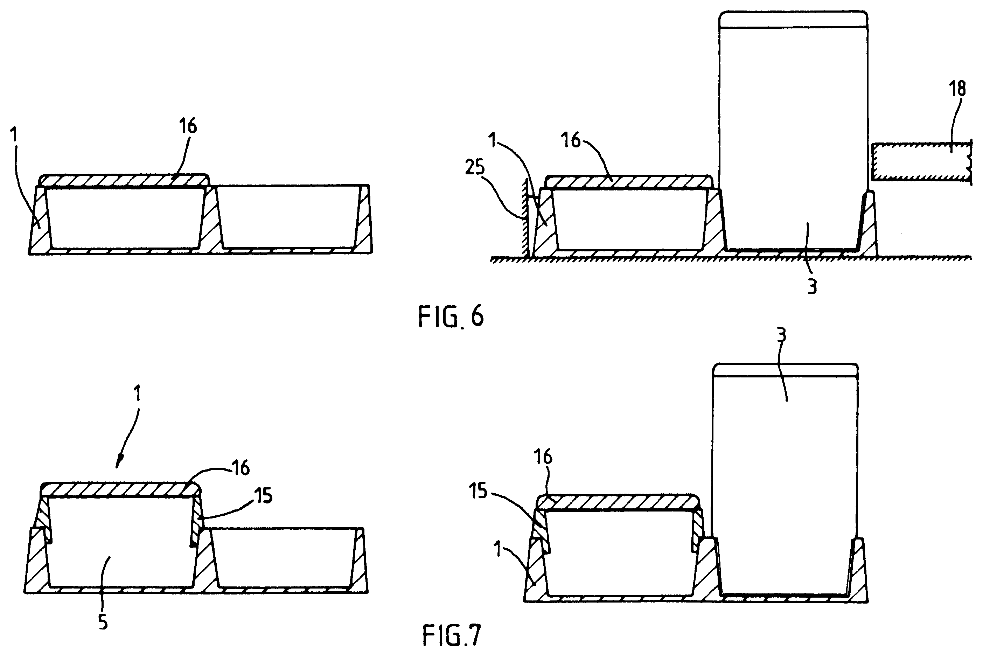

With reference to Fig. 6, there is shown a further embodiment hereof, substantially similar to the one shown in Fig. 5, wherein, however, the opening next to the instrument panel is closed by an upper lid (16), while the opening at the back is open and may be used as opening for inserting a refrigerator (3), as shown in Fig. 6, to the right, which may be close to rear sleeping cab, lower berth (18) being schematically shown in the drawing. Rear upper berth may be reached using front opening lid and rear refrigerator lid as foot-boards.

The embodiment shown in Fig. 7 differs from that of Fig. 6 in that an intermediate element (15) is inserted in the front opening of support (1), so as to obtain ampler embedding room in said front opening, thus increasing the height of the "step" which may be used to reach an upper, rear lid. Inside said ampler embedding room, there may be provided a unit (17) like the one shown in Fig.s 8 and 9 and comprising, according to the embodiment shown in Fig. s 8 and 9, in particular, a telephone (19), a facsimile machine (20), an amplifier (21) and an adapter (22). In the rear opening there being provided an embedding element (3) in the form of a refrigerator.

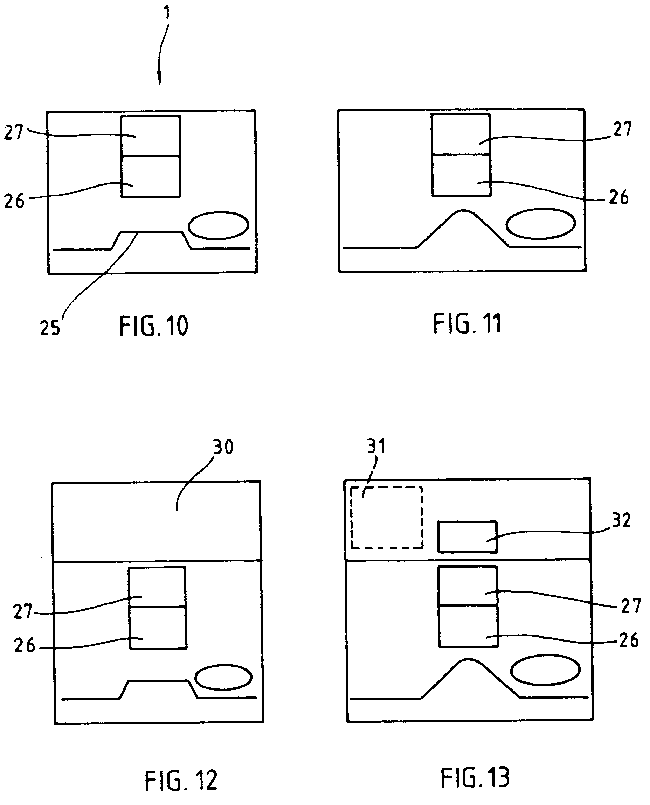

With reference to Fig. 10, there is schematically shown the lay-out of the inside of a commercial vehicle, whereby there is provided, at the back of instrument panel (25), a support (1) comprising a stove (26) for water bath cooking, at the front, and a refrigerator (27) at the back, in particular for commercial vehicles with moderate embedding room.

With reference to Fig. 11, there is shown a similar embodiment to that of Fig. 10, for large commercial vehicles, in particular, for long vehicles.

With reference to Fig. 12, there is shown a similar embodiment to that of Fig. 10, with an additional rear sleeping cab (30). A folding wash basin (31) may also be provided for in connection with large vehicles of the type shown in Fig. 13, next to rear sleeping cab (30), as well as an extension of the support with an additional stove (32) comprising, in the embodiment shown in the drawing, two fixed hot plates.

## Claims

1. A support (1) obtained in the area of the center console (2) of a commercial vehicle for housing additional embedding elements (3, 4), such as a stove or the like, comprising embedding openings (5, 6) covered by closing lid means (7, 8), characterized in that said lid means are formed of lids (7, 8) made of a non-slip material adapted to be trodden on, and in that said support (1) is provided for as a raised floor in said area of center console (2) so as its height (h), comprehensive of said lids (7, 8) in closing position of said openings (5, 6), is equivalent to that of said console (2).

2. A support as claimed in Claim 1, characterized in that at least two openings (5, 6) having a square or rectangular shape are provided, said lids (7, 8) being snap-lids, each one adapted to close a relevant one of said openings (5, 6) and to swivel on the body of said support (1).

3. A support as claimed in Claim 2, characterized in that one of said openings (5, 6) is capable of being fitted with a relevant embedding portion (9) on embedding element (3).

4. A support as claimed in Claim 3, characterized in that said embedding opening presents a tapering shape, in particular, inclined side walls (10).

5. A support as claimed in either Claim 3 or 4, characterized in that said embedding element (3) presents an upper cover\foot-board (11), capable of being used to reach an upper berth inside a cab of a commercial vehicle.

6. A support as claimed in any one of Claims 3 to 5, characterized in that said embedding element (3) is represented by a refrigerator.

7. A support as claimed in any one of Claims 1 to 6, characterized in that inside an opening (6) of support (1) there is mounted an embedding element (4), in the form of a stove, capable of being covered, when not used, by a snap-lid (8).

8. A support as claimed in any one of Claims 1 to 7, characterized in that an intermediate element (15) may be provided for, open on top and at its bottom and in the shape of a box, in an opening (5) of support (1), said intermediate element (15) being capable of being closed by a lid (16).

9. A support as claimed in Claim 8, characterized in that an embedding unit (17), such as telephone and/or facsimile machine, may be housed in said opening (5) provided with said intermediate element (15).

## Patentansprüche

1. Träger für den Bereich der Mittelkonsole (2) eines Nutzfahrzeugs zur Aufnahme zusätzlicher Einbaugeräte (3,4), wie etwa eines Kochers oder dergleichen, mit Einbauöffnungen (5,6), die durch einen Verschlußdeckel (7,8) abgedeckt sind, dadurch **gekennzeichnet**, daß der Deckel aus Deckeln (7,8) aus rutschfestem und trittfestem Material gebildet ist, und daß der Träger (1) als erhöhter Fußboden im Bereich der Mittelkonsole (2) ausgebildet ist, derart, daß seine Höhe (h) einschließlich der Deckel (7,8) in der geschlossenen Position der Öffnungen (5,6) der Höhe der Konsole (2) entspricht.

2. Träger nach Anspruch 1, dadurch **gekennzeichnet**, daß wenigstens zwei Öffnungen (5,6) mit quadratischer Form vorgesehen sind, daß die Deckel (7,8) Schnappdeckel sind und jeweils vorgesehen sind zum Schließen einer der Öffnungen (5,6), und daß die Deckel in bezug auf den Korpus des Trägers (1) schwenkbar sind.

3. Träger nach Anspruch 2, dadurch **gekennzeichnet**, daß eine der Öffnungen (5,6) geeignet ist zum Einstecken eines Einsteckbereichs eines Einbaugeräts.

4. Träger nach Anspruch 3, dadurch **gekennzeichnet**, daß die Einbauöffnung eine konische Form, insbesondere geneigte Seitenwände (10) aufweist.

5. Träger nach einem der Ansprüche 3 oder 4, dadurch **gekennzeichnet**, daß das Einbaugerät (3) einen oberen Deckel bzw. eine Fußplatte (11) aufweist, die zu verwenden ist zum Erreichen eines oberen Liegeplatzes innerhalb einer Kabine des Nutzfahrzeugs.

6. Träger nach einem der Ansprüche 3 bis 5, dadurch **gekennzeichnet**, daß das Einbaugerät (3) durch einen Kühlschrank gebildet wird.

7. Träger nach einem der Ansprüche 1 bis 6, dadurch **gekennzeichnet**, daß innerhalb einer Öffnung (6) des Trägers (1) ein Einbaugerät (4) in der Form einer Kocheinrichtung montiert ist, die, wenn sie nicht benutzt wird, durch einen Schnappdeckel (8) abdeckbar ist.

8. Träger nach einem der Ansprüche 1 bis 7, dadurch **gekennzeichnet**, daß ein Zwischenelement (15) vorgesehen sein kann, das oben und am Boden offen ist und die Form eines Kastens aufweist und sich in einer Öffnung (5) des Trägers (1) befindet, welches Zwischenelement (15) durch einen Deckel (16) verschließbar ist.

9. Träger nach einem der Ansprüche 1 bis 8, dadurch **gekennzeichnet**, daß eine Einbaueinheit (17), wie etwa ein Telefon und/oder ein Telefaxgerät, in der Öffnung (5) angeordnet und mit dem Zwischenelement (15) versehen sein kann.

## Revendications

1. Support (1) obtenu dans la zone de la console centrale (2) d'un véhicule utilitaire pour loger des éléments encastrés supplémentaires (3, 4), tels qu'un chauffage ou analogue, comprenant des ouvertures d'encastrement (5, 6) recouvertes par des moyens de couvercle de fermeture (7, 8),
caractérisé en ce que
les moyens de couvercle sont constitués par des couvercles (7, 8) réalisés dans un matériau non glissant et destiné à être enfoncé en place, et en ce que le support (1) est prévu sous la forme d'un plancher surélevé dans la zone de la console centrale (2), de façon que sa hauteur (h), comprenant les couvercles (7, 8) en position de fermeture des ouvertures (5, 6), soit équivalente à celle de la console (2).

2. Support selon la revendication 1,
caractérisé en ce qu'
il comporte au moins deux ouvertures (5, 6) présentant une forme carrée ou rectangulaire, les couvercles (7, 8) étant des couvercles rabattables destinés chacun à fermer l'une des ouvertures correspondantes (5, 6) et à pivoter sur le corps du support (1).

3. Support selon la revendication 2,
caractérisé en ce que
l'une des ouvertures (5, 6) est capable d'être équipée d'une partie d'encastrement correspondante (9) sur l'élément d'encastrement (3).

4. Support selon la revendication 3,
caractérisé en ce que
l'ouverture d'encastrement présente une forme conique allant en s'amincissant et, en particulier, des parois latérales inclinées (10).

5. Support selon l'une ou l'autre des revendications 3 ou 4,
caractérisé en ce que
l'élément d'encastrement (3) présente un anneau de capot/socle supérieur (11) capable d'être utilisé pour atteindre une couchette supérieure à l'intérieur d'une cabine d'un véhicule utilitaire.

6. Support selon l'une quelconque des revendications 3 à 5,
caractérisé en ce que
l'élément d'encastrement (3) est représenté par un réfrigérateur.

7. Support selon l'une quelconque des revendications 1 à
6, caractérisé en ce qu'
à l'intérieur d'une ouverture (6) du support (1) est monté un élément d'encastrement (4), sous la forme d'un chauffage, capable d'être recouvert, lorsqu'il n'est pas utilisé, par un couvercle rabattable (8).

8. Support selon l'une quelconque des revendications 1 à
7, caractérisé en ce qu'
il comporte un élément intermédiaire (15), ouvert dans le haut et dans le bas et présentant la forme d'une boîte, dans une ouverture (5) du support (1), cet élément intermédiaire (15) étant capable d'être fermé par un couvercle (16).

9. Support selon la revendication 8,
caractérisé en ce que
un bloc d'encastrement (17), tel qu'un téléphone ou une machine de fac-similé, est logé dans l'ouverture (5) munie de l'élément intermédiaire (15).
